# EUROPEAN PATENT APPLICATION

(11) **EP 1 903 525 A1**
(43) Date of publication of application: **26.03.2008**
(21) Application number: 06077209.2
(22) Date of filing: 11.12.2006
(51) Int. Cl.: G08B 21/04, G08B 25/01, G08B 25/08, G08B 25/14, A61B 5/00, H04M 11/04

(54) **Remote monitoring and care**

(30) Priority: 13.09.2006 US 844137
(71) Applicant: Koninklijke KPN N.V., 2516 CK The Hague (NL)
(72) Inventor: Brink, Jaap, 8322 AK Urk (NL); Passchier, Igor, 2548 RX The Hague (NL)
(74) Representative: Wuyts, Koenraad Maria

(57) **Abstract**

A system (1) for providing remote services, such as monitoring and communication services for patient care, comprises:
• a cybercenter (10) capable of controlling data traffic and voice traffic,
• at least one operator unit (11) capable of communicating with the cybercenter via a first network (12),
• at least one service unit (41) capable of communicating with the cybercenter via the first network (12), and
• at least one home unit (15) capable of communicating with the cybercenter via a second network (13).

The operator unit (11) is arranged for communicating with the at least one home unit (15) via the cybercenter (10) and for establishing communication between the at least one home unit (15) and the at least one service unit (41) via the cybercenter (10). The first network (12) is preferably a secure network providing controlled access.

## Description

### Background of the Invention

The present invention relates to remote monitoring and care. More in particular, the present invention relates to a system and method for remotely monitoring patients and, if necessary, providing care.

It is well known that the cost of healthcare is rising and will continue to rise over the next years. A substantial part of this cost is spent on transport and travel time. Nurses, doctors and other caretakers often have to travel to visit patients at their homes, and consequently spend part of their valuable time on basically non-essential activities such as traveling. Alternatively, patients can come to a care center, such as a hospital or clinic, but many patients are unable to drive and will require a taxi or ambulance, which also adds to the expense of healthcare. As the number of elderly people in many countries increases, this problem will become more serious.

In order to save on transportation expenses, remote patient monitoring methods have been proposed. Typically, a healthcare center or doctor's practice makes regular telephone calls to selected patients to inquire about their health. These telephone calls may result in a visit if this appears necessary. During the visit, the patient's health may be further examined using suitable medical apparatus, such as a sphygmometer or a stethoscope. Alternatively, the patient may call to request a doctor's visit, or patients are visited on a regular basis, also in the absence of telephone calls.

Although such methods reduce the amount of travel, they still require a substantial involvement of the healthcare center or other caretaker, also in cases in which a visit proves to be unnecessary. When additional care is required, for example a visit to a specialist, the healthcare center needs to arrange consultations on behalf of the patient. This involvement of the staff of the healthcare center or doctor's practice adds to the cost of the healthcare.

### Summary of the Invention

It is an object of the present invention to overcome these and other problems of the Prior Art and to provide a system for providing remote services, including monitoring and communication services, which allow a more efficient patient care.

Accordingly, the present invention provides a system for providing remote services including monitoring and communication services, the system comprising:
- a cybercenter capable of controlling voice traffic, video traffic and/or data traffic,
- at least one operator unit capable of communicating with the cybercenter via a first network,
- at least one service unit capable of communicating with the cybercenter via the first network, and
- at least one home unit capable of communicating with the cybercenter via a second network,
   wherein the cybercenter is arranged for establishing communication between the at least one operator unit and the at least one home unit, and for establishing communication between the at least one home unit and the at least one service unit.

By providing a cybercenter capable of controlling voice, video and/or and data traffic and setting up communications between the home units and the service units, a flexible system is obtained in which the cybercenter effectively controls the communication between the units. The traffic controlled by the cybercenter comprises communication by transmitting suitable data and/or signals, the transmission of these data and/or signals to the various units is enabled or disabled by the cybercenter.

The system of the present invention allows the operator units to initiate communications, but also allows the home units to contact the operator units and/or other service units. Service units, such as healthcare centers, doctor's practices and specialist's practices may be contacted at the initiative of either the operator units or the home units, or may be contacted automatically by the cybercenter on the basis of data received from the home units.

Although a single operator unit may be used, it is preferred that multiple operator units are present, for example five, ten or twenty operator units, although other numbers are also possible. The multiple operator units may have different locations, thus providing a distributed set of operator units. Each operator unit may be matched with home units at specific locations, for example in the same region or area where the operator unit is located, although this is not essential.

In a preferred embodiment, the cybercenter is arranged for automatically establishing communication between a home unit and a service unit on the basis of data received from said home unit. This allows a home unit to communicate with a service unit without requiring any intervention of an operator unit, thus further reducing the cost of operating the system.

In a further preferred embodiment, the first network is a secure network providing controlled access. That is, access to the first network is restricted and can only be provided by the cybercenter, possibly under the control of the operator units. This feature prevents the home units being contacted by third parties via the first network, and also prevents the home units from contacting third parties without authorization from the cybercenter. Accordingly, the confidentiality of information exchanged between the operator units, the service units and the home units is maintained.

Advantageously, the system of the present invention may further comprise at least one and preferably multiple auxiliary service units capable of communicating with the cybercenter, the cybercenter controlling any traffic between the at least one home unit and the auxiliary service units. These auxiliary service units may not be connected to the first network, but may be connected to the cybercenter using separate connections, such as VPN (Virtual Private Network) links. The (first) service units connected to the first network may be health centers or doctor's practices which are directly involved in patient care, while the (second or) auxiliary service units not coupled to the first network may be insurance companies, catering and food delivery services, and other parties which are indirectly involved in patient care.

The present invention also provides a home unit and a cybercenter for use in the system defined above. The home unit may have telephony, remote measurement, video and/or Internet portal functions. The cybercenter may comprise a call center section and a service center section.

The present invention further provides a method of operating a system as defined above. More in particular, the present invention further provides a method of operating a system for providing remote services including monitoring and communication services, the system comprising:
- a cybercenter capable of controlling voice traffic, video traffic and/or data traffic,
- at least one operator unit capable of communicating with the cybercenter via a first network,
- at least one service unit capable of communicating with the cybercenter via the first network, and
- at least one home unit capable of communicating with the cybercenter via a second network,
   which method comprises the steps of:

- the cybercenter establishing communication between the at least one operator unit and the at least one home unit, and/or
- the cybercenter establishing communication between the at least one home unit and the at least one service unit.
   The method of the present invention also provides the advantages referred to above.

The method of the present invention may comprise the step of the cybercenter automatically establishing communication between a home unit and a service unit on the basis of data received from said home unit, in which case the step of establishing communication between the at least one operator unit and the at least one home unit may be omitted. Further preferred embodiments of the method of the present invention will become apparent from the description below.

The present invention additionally provides a computer program product for carrying out the method defined above. A computer program product may comprise a set of computer executable instructions stored on a data carrier, such as a CD or a DVD. The set of computer executable instructions, which allow a programmable computer to carry out the method as defined above, may also be available for downloading from a remote server, for example via the Internet.

It is noted that in this document, the term "patient" will be used to refer to a client of a monitoring system, which may include people having a good health but who require monitoring because of their age or other circumstances. The term "patient" may include the elderly, but is not so limited and may refer to people of all ages and abilities.

### Brief Description of the Drawings

The present invention will further be explained below with reference to exemplary embodiments illustrated in the accompanying drawings, in which:
Fig. 1 schematically shows a first embodiment of a remote monitoring system according to the present invention.
Fig. 2 schematically shows a second embodiment of a remote monitoring system according to the present invention.
Fig. 3 schematically shows a first embodiment of a home monitoring unit according to the present invention.
Fig. 4 schematically shows a second embodiment of a home monitoring unit according to the present invention.
Fig. 5 schematically shows an embodiment of a cybercenter according to the present invention.

### Description of Preferred Embodiments

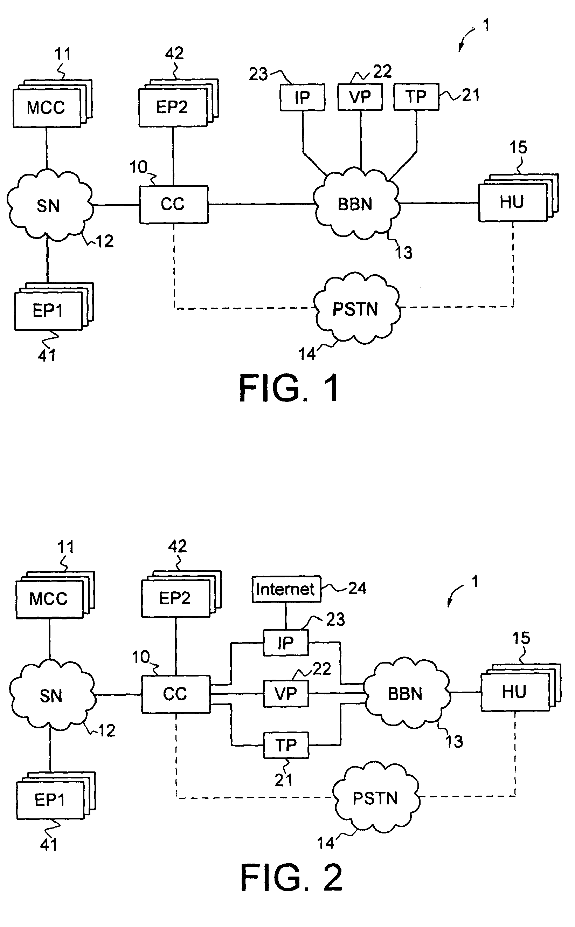

The remote monitoring system 1 shown merely by way of non-limiting example in Fig. 1 comprises a cybercenter 10, a plurality of operator units 11, a first network 12, a second network 13, an optional PSTN network 14 and home units 15. In the example shown, first service units 41 are coupled to the first network 12, second service units 42 are coupled to the cybercenter 10, while Internet services units 21, 22 and 23 are coupled to the second network 13.

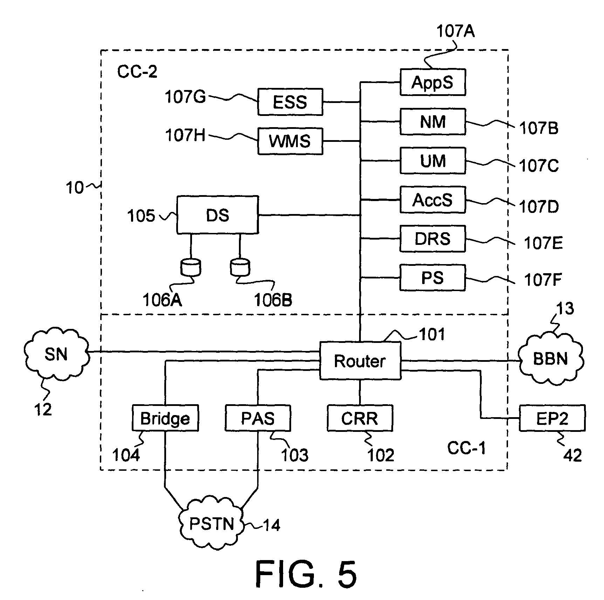

The cybercenter (CC) 10, which will be discussed later in more detail with reference to Fig. 5, essentially is the core of the system. The cybercenter 10 controls the communications between most units of the system, may carry out the actual routing and may have additional tasks, such as access control and accounting.

The first or service network (SN) 12 connects the cybercenter 10 and the operator units 11, which are also referred to as Monitoring and Contact Center (MCC) units. In the embodiment shown, the service network 12 is a limited access network, access being controlled by the cybercenter 10.

The second network 13 is, in the embodiment shown, a broadband network (BBN). This second network, which may be a public network, connects the cybercenter 10 and the home units (HU) 15. The second network 13 is preferably suitable for data communication, such as Internet Protocol based communication, which may include data transfer, voice (e.g. Voice-over-Internet) and video applications.

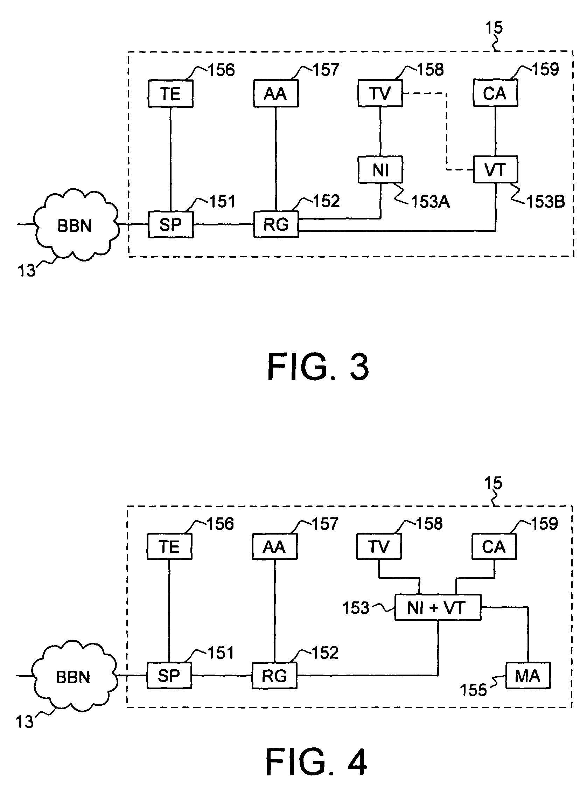

The home units (HU) 15, which will be explained later in more detail with reference to Figs. 3 & 4, comprise telecommunication means, such as means for establishing a telephone call (via PSTN and/or via an Internet-based network, such as the broadband network 13). The home units 15 preferably also comprise video means for establishing a video connection, and may further comprise remote measuring means and/or remote apparatus control means.

The optional connection between the home units 15 and the cybercenter 10 via PSTN (Public Switched Telephone Network) 14 serves for emergency calls and alerting, and is particularly intended for situations where the availability and capacity of the broadband network 13 cannot be guaranteed. Accordingly, the PSTN 14 serves as a back-up for the broadband network 13, but is primarily intended for the transmission of emergency messages.

The Internet services units 21, 22 and 23 are coupled to the broadband network 13 in order to provide additional, Internet technology based services. Internet Protocol based television provider (TP) unit 21 allows television programs to be offered to the house units 15. Internet Protocol based voice communication provider (VP) unit 22 makes VoIP (Voice over Internet Protocol) communication possible, that is, telephone calls using Internet technology. Internet provider (IP) unit 23 may offer generic Internet services.

As shown in Fig. 1, the first service units 41 are coupled to the cybercenter 10 via the first network 12 which is, in the embodiment shown, a service network (SN) having controlled access. The cybercenter 10 controls access to the first network 12 and, accordingly, to the first service units 41.

In a system for providing remote patient care, the first service units 41 are (first) external parties (EP1) which may comprise doctor's practices, healthcare centers, specialist's practices and care centers, healthcare insurance companies, and similar parties. The first service units 41 may be referred to as "trusted" parties that each offer a service directly related to the purpose of the system, which in the present example is offering remote patient monitoring and healthcare.

Second service units 42 are not coupled to the first network 12 but are coupled to the cybercenter 10 using, for example, Internet Protocol based VPN (Virtual Private Network) connections. The second service units 42 are (second) external parties (EP2) which may comprise further parties such as supermarket home delivery services, restaurant home delivery services, and similar parties which may be beneficial to the users of the home units but which are not involved in providing healthcare.

In the embodiment of Fig. 1, the broadband network 13 is directly coupled to the cybercenter 10. In the embodiment of Fig. 2, however, the broadband network 13 is indirectly coupled to the cybercenter 10, via the Internet services units 21, 22 and 23. In this configuration, the Internet services units 21, 22 and 23 each provide their respective services directly to the cybercenter 10 while also providing a respective connection to the broadband network 13. The Internet Protocol television provider (TP) unit 21 may, for example, provide portal services, the Voice over Internet Provider (VP) unit 22 may provide telephone and camera (e.g. videophone) services, while the Internet provider (IP) unit 23 may provide Internet access.

The system 1 of the present invention may comprise only a single operator unit 11, but in the preferred embodiment shown multiple operator units 11 are provided, for example two, five, ten, twenty or more than fifty operator units 11. These operator units may have the same location, but preferably at least some have distinct locations. Advantageously, operator units 11 are located in the same city, area or region as the home units they serve. Accordingly, the system of the present invention provides distributed operator units. This has the advantage that the operator of the operator units 11 may be aware of local circumstances, may speak the local dialect, and thus provide a more personal service while utilizing a system that may span an entire state or country or even several countries.

In the embodiment of Fig. 2, the Internet Provider (IP) unit 23 is coupled to the Internet 24 to provide Internet access to the home units 15. Although the units 21, 22 and 23 are each shown as a single unit, multiple units may be present, for example multiple television provider units 21.

As can be seen, the Internet-based services units are not directly coupled to the first network 12 but are separated from this network by the cybercenter 10. This adds to the security of the system 1, as the cybercenter can grant or deny access to the first network 12.

In both embodiments, communications can be initiated by either the operator units 11, the home units 15 or the first service (first external parties) units 41. However, all communications are controlled by the cybercenter 10 and may be supervised by the operator units 11. The operator units 11 may contact a particular home unit 15 by making a regular telephone call or a video telephone call, for example to inquire about the user's health. In her response, the user of the particular home unit 15 may mention a health problem, which could cause the operator unit 11 to establish a connection between the home unit 15 and a first service unit 41, for example a doctor's practice. It can be envisaged that the connection between the operator unit and the home unit on the one hand, and between the first service unit and the home unit on the other hand, may exist simultaneously. In addition, a connection between the operator unit and the first service unit may be established, which additional connection may also exist simultaneously.

In this respect it is noted that the term "connection" is meant to refer to any technique of providing voice, video and/or data communication between two parties, such as an operator unit and a home unit, even in the absence of a physical connection. In broadband networks, packet switched technologies are used to establish communications, and such technologies do not use physical "connections" in the conventional sense.

An example of a service which may advantageously be provided using the system of the present invention is remote consulting. The patient may for example press a suitable button on the remote control unit of his home unit. This causes the home unit to activate its screen unit and camera unit and to produce a signal which is transmitted as data to the cybercenter. Upon receipt of the data, the cybercenter establishes a call to an operator unit, and preferably simultaneously to the home unit concerned. A nurse or other operator at the operator unit answers the call, thus establishing both a voice and a video connection between the operator unit and the home unit. The cybercenter also retrieves patient (that is, user) data and sends these data to the operator unit. The nurse is now able to speak with and see the patient, and to consult his medical history. The nurse gives suitable advice and, if necessary, refers the patient to a doctor or specialist. This referral may be done without any effort on the part of the patient as the operator may set up a call to a doctor via the cybercenter 10.

Another example of a service which may be offered in accordance with the present invention is remote measuring, that is, remotely taking measurements of blood pressure and other health-related values. An operator unit may initiate a voice connection (telephone call) with a home unit via the cybercenter (alternatively, this service may be initiated by the cybercenter, contacting both an operator unit and a home unit). The operator gives spoken instructions regarding the use of the measuring devices involved, while the cybercenter may provide a list of previously measured values (medical history) to both the operator unit and the home unit. At the home units, these historic measurement values may be shown on the television screen or on the video telephone screen, if present. The camera of the home unit allows the operator to actually see the patient while he uses the measurement equipment, thus allowing the operator to give valuable advice and feedback. In preferred embodiments, the camera is remotely controlled by the operator unit and is capable of zooming in, zooming out, and rotating in both the horizontal and vertical plane. The measurement devices may also have remote control capabilities, and are coupled to the home unit to allow the measured values to be transmitted through the cybercenter to the operator unit. The operator may evaluate the measured values and contact a doctor if required. The doctor may be contacted by placing a telephone call, by sending an email or similar data message, or by sending a fax. The cybercenter 10 may advantageously transmit the patient data (both present and historical values) to the doctor's practice (external party 41) via the first (secure) network 12.

Embodiments can be envisaged in which this evaluation of remotely measured patient values is carried out at least partially automatically, for example in the cybercenter, by comparing the measured values with predetermined threshold values and/or with previously measured values pertaining to the same patient.

Other services which may be offered using the system of the present invention may include hospital waiting list intervention, where various hospitals or other institutions are approached by the operators to inquire about waiting lists for certain treatments, ordering medical and other supplies, where patients can order any supplies via the operator units, remote advice regarding medical and health issues, sports and exercise issues, where operators provide advice, remote socializing, where the operator connects a patient with another patient, and various other services.

A first embodiment of the home unit 15 of the present invention is schematically illustrated in Fig. 3. In the merely exemplary embodiment shown, the home unit 15 comprises a splitter (SP) 151, a residential gateway (RG) 152, a network interface (NI) unit 153A, a video telephony (VT) unit 153B, a telephone (TE) unit 156, an auxiliary apparatus (AA) unit 157, a television (TV) unit 158, and a camera (CA) unit 159. The home unit may further comprise a (remote) control unit (not shown).

The splitter unit 151, which is coupled to the (second) network 13, separates any incoming signals into telephone signals and other (e.g. ADSL) signals. The telephone signals are transmitted to the telephone unit 156, while the other signals are transmitted to the residential gateway 152. It will be understood that signals may travel both from and towards the second network 13.

The residential gateway 152 may be a conventional ADSL modem or equivalent device having Internet protocol routing capabilities. The signals demodulated by the residential gateway 152 are transmitted to the auxiliary apparatus unit 157, the network interface unit 153A and the video telephony unit 153B. Accordingly, the connection between the residential gateway 152 and the auxiliary apparatus unit 157 is preferably an Internet Protocol based link, as is the connection between the residential gateway 152 and the network interface unit 153A, and the connection between the residential gateway 152 and the video telephony unit 153B. The auxiliary apparatus unit 157 may comprise, for example, a personal computer (PC) and/or other apparatus requiring an Internet Protocol based link.

The network interface unit 153A may be a set-top box constituting an Internet portal, providing Internet images using the television screen of television (TV) unit 158. This allows the system to display information to the users, for example information regarding service telephone numbers, instructions regarding the use of the home unit, medication, available doctors, etc.. In the embodiment shown, the network interface unit 153A may convert digital video content into an analog signal and convert a text description of a user interface into a graphical user interface.

The video telephony (VT) unit 153B is also coupled to the residential gateway 152 so as to allow Internet Protocol based communication. A camera (CA) unit 159 is coupled to the video telephony unit 153B to capture images of the home user. The video telephony unit 153B may be provided with a screen to display video telephony images, and/or a microphone to capture sound. If the video telephony unit is not provided with a screen, the television unit 158 is used to display the video telephony images. To this end an optional connection (drawn as an interrupted line in Fig. 3) may be provided between the video telephony unit 153B and the television unit 158. This optional connection may also be present when both a television unit 158 and a video telephony unit having video capabilities are present.

The embodiment of Fig. 3 allows home users to make conventional telephone calls using the telephone unit 156, receive information using the television unit 158, and place video telephone calls using the video telephony unit 153B (and optionally the television unit 158). The camera unit 159 makes surveillance possible. In addition, other apparatus, such as personal computers, may be connected to the residential gateway unit 152, thus providing all-purpose Internet access as well.

Several of the constituent units of the home unit 15 may be controlled remotely by the operator units 11, through the cybercenter 10. In particular, the video telephony unit 153B and its associated camera unit 159 may be remotely controlled to allow remote surveillance. The remote control of the camera may not only include switching the camera on and off, but also controlling the camera's movements (in both the horizontal and the vertical plane) and zooming in and out.

A second embodiment of the home unit 15 of the present invention is schematically illustrated in Fig. 4. In this embodiment, the home unit 15 also comprises a splitter (SP) 151, a residential gateway (RG) 152, a telephone (TE) unit 156, an auxiliary apparatus (AA) unit 157, a television (TV) unit 158, and a camera (CA) unit 159. The network interface (NI) unit 153A and the video telephony (VT) unit 153B of Fig. 3 have been combined into a single (NI+VT) unit 153. In addition, a medical apparatus (MA) unit 155 is provided, which is coupled to the combined network interface and video telephony unit 153. The medical apparatus unit 153 may comprise a sphygmometer, a heart rate measuring device, and similar apparatus.

It will be understood that other embodiments of the home unit 15 may be envisaged without leaving the scope of the present invention, for example home units in which no telephone unit 156 and/or no auxiliary apparatus unit 157 is present. In other embodiments, the medical apparatus unit 155 may be coupled to the residential gateway 152, the network interface unit 153A, the video telephony unit 153B, or the combined unit 153.

A preferred embodiment of a cybercenter (CC) 10 according to the present invention is schematically illustrated in Fig. 5. The cybercenter 10 shown in Fig. 1 comprises two sections, a first or call center section CC-1 and a second or service center section CC-2. Although these sections are shown to constitute a single unit, embodiments can be envisaged in which these sections are physically separate.

The call center section CC-1 comprises, in the embodiment shown, a router unit 101, a call routing rules (CRR) unit 102, a Personal Alarm Switch (PAS) unit 103, and a PSTN/VoIP Bridge unit 104 (VoIP = Voice over Internet Protocol).

The router unit 101 is the hub of the call center section CC-1 and is connected externally to the service (first) network 12 and the broadband (second) network 13, as well as second service units 42 (see also Figs. 1 & 2). Internally, the router unit 101 is connected to the call routing rules (CRR) unit 102, the Personal Alarm Switch (PAS) unit 103 and the PSTN/VoIP Bridge unit 104.

The call routing rules unit 102 contains all rules pertaining to the routing of calls in the system 1, including access rules. Some rules may prescribe that emergency calls are handled first, while other rules may state that voice, data and video items relating to the same call may be routed to different destinations, for example different operator units, possibly to more than one destination per item. Still other rules may allow multiple video calls to be routed to a single operator units, with or without the associated voice items, while further rules may determine under which circumstances an auxiliary (external party) unit 42 may have access to a home unit via the second network 13.

In the preferred embodiment the router unit 101 comprises a firewall to prevent any undesired traffic between the various units, and in particular to prevent any undesired communication with the first or service network 12, which is a secure (limited access) network. Access to the first network 12 is preferably only granted upon authorization from an operator unit (11 in Figs. 1 & 2), or upon authorization based on access rules stored in the call routing rules (CRR) unit 102 of the cybercenter 10.

The Personal Alarm Switch unit 103 and the PSTN/VoIP Bridge unit 104 are connected to the PSTN 14. The Personal Alarm Switch unit 103 allows emergency calls from the home units to reach the router 101 via the PSTN 14, while the PSTN/VoIP Bridge unit 104 provides PSTN communication in addition to Internet based (broadband) communication.

The router unit 101 is also connected to the database server unit 105 and to the auxiliary units 107A-107H of the second or service center section CC-2. In the embodiment shown, the service center section CC-2 comprises a database server (DS) unit 105, a client data storage unit 106A, a event data storage unit 106B, an application servers (AppS) unit 107A, a network management (NM) unit 107B, a user management (UM) unit 107C, an accounting server (AccS) unit 107D, a data retrieval server (DRS) unit 107E, a portal server (PS) unit 107F, an expert system server (ESS) unit 107G and a workflow management server (WMS) unit 107H.

The database server unit 105 retrieves data from the client data storage unit 106A and the event data storage unit 106B and stores suitable data in these units. The client data storage unit 106A contains data concerning the clients (that is, the users of the home units 15). The event data storage unit 106B contains data concerning events, such as the time and date of telephone calls made to and from the home units, of any emergency calls, etc..

The application servers unit 107A contains the software programs (that is, applications) used to provide certain functions of the systems, such as certain services. The network management unit 107B provides management functions of the service network 12 and of the operator units 11, while the user management unit 107C manages all relevant data of users (e.g. patients), such as names, addresses, medical data, and data relevant to other services.

The accounting server unit 107D tracks data of user accounts for the purpose of billing and for similar purposes. The data retrieval server 107E provides data retrieval functions, including retrieving data from remote locations. Accordingly, the accounting server unit 107E stores the location of the relevant data. The portal server unit 107F provides Internet access (portal) functions, for example for Internet television and for auxiliary apparatus in the home units (Figs. 3 & 4).

Together, the units 107A-F allow the routing of calls under certain restrictions, such as limited access to the first (service) network 12, the storage and retrieval of various data, including patient data and event data, and other functions.

The expert system server (ESS) unit 107G and the workflow management server (WMS) unit 107H together provide the possibility of automatically routing calls and automatically establishing communication with certain units, thus adding specific intelligence to the system. More in particular, the expert system unit 107G and the workflow management server WMS unit 107H may cause the router unit 101 to automatically establish a connection between a home unit (via the second network 13) and a service unit (via the first network 12) on the basis of certain data received from the particular home unit. Such data may include emergency alert data, medical measurement data (e.g. blood pressure or body temperature) exceeding certain predetermined thresholds, and other suitable data. Alternatively, or additionally, the router unit 101 could be made to establish a connection with an operator unit (11 in Figs. 1 & 2) on the basis of such data.

In the embodiments described above, economies of scale may be achieved by providing centralized intelligence in the cybercenter. Large numbers of operator units 11 and home units 15 may be connected to the system, irrespective of their locations. The system of the present invention is capable of offering a range of services having a high degree of flexibility.

The present invention is based upon the insight that a system for providing remote services having a central unit (such as the cybercenter) controlling the routing and access of the system allows remote monitoring by relatively economical operator units. The present invention benefits from the further insight that some services should be offered through a limited access network in order to guarantee the integrity of the user data.

It is noted that any terms used in this document should not be construed so as to limit the scope of the present invention. In particular, the words "comprise(s)" and "comprising" are not meant to exclude any elements not specifically stated. Single (circuit) elements may be substituted with multiple (circuit) elements or with their equivalents.

It will be understood by those skilled in the art that the present invention is not limited to the embodiments illustrated above and that many modifications and additions may be made without departing from the scope of the invention as defined in the appending claims.

## Claims

1. A system (1) for providing remote services including monitoring and communication services, the system comprising:
• a cybercenter (10) capable of controlling voice traffic, video traffic and/or data traffic,
• at least one operator unit (11) capable of communicating with the cybercenter via a first network (12),
• at least one service unit (41) capable of communicating with the cybercenter via the first network (12), and
• at least one home unit (15) capable of communicating with the cybercenter via a second network (13),
wherein the cybercenter (10) is arranged for establishing communication between the at least one operator unit (11) and the at least one home unit (15), and for establishing communication between the at least one home unit (15) and the at least one service unit (41).

2. The system according to claim 1, comprising multiple operator units (11).

3. The system according to claim 1 or 2, wherein the cybercenter (10) is arranged for automatically establishing communication between a home unit (15) and a service unit (41) on the basis of data received from said home unit.

4. The system according to claim 1, 2 or 3, wherein the first network (12) is a secure network providing controlled access.

5. The system according to any of the preceding claims, further comprising at least one auxiliary service unit (42) capable of communicating with the cybercenter (10), wherein the cybercenter controls any traffic between the at least one home unit (15) and the at least one auxiliary service unit (42).

6. The system according to claim 5, wherein the at least one service unit (41) is coupled to the first network (12) and the at least one auxiliary service unit (42) is coupled to the cybercenter (10).

7. The system according to any of the preceding claims, further comprising Internet services units (21, 22, 23) coupled to the cybercenter (10).

8. The system according to any of the preceding claims, further comprising a PSTN network (14) arranged between the at least one home unit (15) and the cybercenter (10) for emergency and/or back-up communication.

9. The system according to any of the preceding claims, wherein the home unit (15) comprises video capabilities, remote measurement capabilities and/or Internet access capabilities.

10. A cybercenter unit (10) for use in the system (1) according to any of the preceding claims, the cybercenter unit comprising a call center part (CC-1) and a service center part (CC-2).

11. The cybercenter unit according to claim 10, wherein the service center part (CC-2) comprises a data base server unit (105) and auxiliary units (107).

12. The cybercenter unit according to claim 10 or 11, wherein the call center part (CC-1) comprises a router unit (101) and a call routing rules unit (102).

13. The cybercenter unit (10) according to any of claims 10-12, arranged for automatically establishing communication between a home unit (15) and a service unit (41) on the basis of data received from said home unit.

14. A home unit (15) for use in the system according to any of claims 1-9, the home unit comprising a residential gateway (152), a network interface unit (153A) and a video telephony unit (153 B), and/or a telephone unit (156).

15. The home unit according to claim 14, wherein the network interface unit (153A) and the video telephony unit (153B) constitute a single, combined unit (153).

16. The home unit according to claim 14 or 15, further comprising a camera unit (159) and/or a television unit (158).

17. The home unit according to any of claims 14-16, further comprising a medical apparatus unit (155).

18. A method of operating a system (1) for providing remote services including monitoring and communication services, the system comprising:
• a cybercenter (10) capable of controlling data traffic and voice traffic,
• at least one operator unit (11) capable of communicating with the cybercenter via a first network (12),
• at least one service unit (41) capable of communicating with the cybercenter via the first network (12), and
• at least one home unit (15) capable of communicating with the cybercenter via a second network (13),
which method comprises the steps of:
• the cybercenter (10) establishing communication between the at least one operator unit (11) and the at least one home unit (15), and/or
• the cybercenter (10) establishing communication between the at least one home unit (15) and the at least one service unit (41).

19. The method according to claim 18, further comprising the step of the cybercenter (10) automatically establishing communication between a home unit (15) and a service unit (41) on the basis of data received from said home unit

20. The method according to claim 18 or 19, wherein the first network (12) is a secure network, the method comprising the further step of the cybercenter (10) controlling access to the first network (12).

21. A computer program product for carrying out the method according to any of claims 18-20.
